(19) **Europäisches Patentamt / European Patent Office / Office européen des brevets**

(11) **EP 4 229 636 B1**

(12) **FASCICULE DE BREVET EUROPEEN**

(45) Date de publication et mention
de la délivrance du brevet:
**24.12.2025 Bulletin 2025/52**

(21) Numéro de dépôt: **21798075.4**

(22) Date de dépôt: **27.09.2021**

(51) Classification Internationale des Brevets (IPC):
**G10L 21/0208** (2013.01)    **H04B 3/23** (2006.01)
**H04M 9/08** (2006.01)

(52) Classification Coopérative des Brevets (CPC):
**G10L 21/0208; H04M 9/082;** G10L 2021/02082

(86) Numéro de dépôt international:
**PCT/FR2021/051659**

(87) Numéro de publication internationale:
**WO 2022/079365 (21.04.2022 Gazette 2022/16)**

(54) **PROCÉDÉ, PROGRAMME INFORMATIQUE ET DISPOSITIF POUR UNE ANNULATION D'ÉCHO À PAS VARIABLE**

VERFAHREN, COMPUTERPROGRAMM UND VORRICHTUNG ZUR ECHOUNTERDRÜCKUNG MIT VARIABLER GRUNDFREQUENZ

METHOD, COMPUTER PROGRAM AND DEVICE FOR VARIABLE PITCH ECHO CANCELLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2020 FR 2010570**

(43) Date de publication de la demande:
**23.08.2023 Bulletin 2023/34**

(73) Titulaire: **Orange**
**92130 Issy-les-Moulineaux (FR)**

(72) Inventeurs:
- **GAULTIER, Clément**
  **92326 Châtillon Cedex (FR)**
- **GUERIN, Alexandre**
  **92326 Châtillon Cedex (FR)**
- **EMERIT, Marc**
  **92326 Châtillon Cedex (FR)**
- **PALLONE, Grégory**
  **92326 Châtillon Cedex (FR)**

(74) Mandataire: **Plasseraud IP**
**104 Rue de Richelieu**
**CS92104**
**75080 Paris Cedex 02 (FR)**

(56) Documents cités:
- **PAEZ BORRALLO JOSEM ET AL: "On the implementation of a partitioned block frequency domain adaptive filter (PBFDAF) for long acoustic echo cancellation", SIGNAL PROCESSING, ELSEVIER SCIENCE PUBLISHERS B.V. AMSTERDAM, NL, vol. 27, no. 3, 1 June 1992 (1992-06-01), pages 301 - 315, XP026671891, ISSN: 0165-1684, [retrieved on 19920601], DOI: 10.1016/0165-1684(92)90077-A**
- **TOON VAN WATERSCHOOT ET AL: "Double-Talk-Robust Prediction Error Identification Algorithms for Acoustic Echo Cancellation", IEEE TRANSACTIONS ON SIGNAL PROCESSING, IEEE SERVICE CENTER, NEW YORK, NY, US, vol. 55, no. 3, 1 March 2007 (2007-03-01), pages 846 - 858, XP011165458, ISSN: 1053-587X, DOI: 10.1109/TSP.2006.887155**
- **TRUMP T: "A frequency domain adaptive algorithm for colored measurement noise environment", ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, vol. 3, 12 May 1998 (1998-05-12), pages 1705 - 1708, XP010279982, ISBN: 978-0-7803-4428-0, DOI: 10.1109/ICASSP.1998.681786**

EP 4 229 636 B1

- GAULTIER CLEMENT ET AL: "Double-Talk Robust Acoustic Echo Cancellation Using Partition Block Frequency-Domain Adaptive Filtering", 2021 29TH EUROPEAN SIGNAL PROCESSING CONFERENCE (EUSIPCO), 23 August 2021 (2021-08-23), pages 171 - 175, XP055876404, Retrieved from the Internet <URL:https://ieeexplore.ieee.org/stampPDF/getPDF.jsp?tp=&arnumber=9616039&ref=aHR0cHM6Ly9pZWVleHBsb3JlLmllZWUub3JnL2RvY3VtZW50Lzk2MTYwMzk=> DOI: 10.23919/EUSIPCO54536.2021.9616039

**Description**

**Domaine technique**

La présente description concerne un procédé et un dispositif d'annulation d'écho.

**Technique antérieure**

Dans le contexte de captation et reproduction sonore simultanée, il convient d'avoir recours à un traitement d'annulation d'écho acoustique (ou « AEC » ci-après).

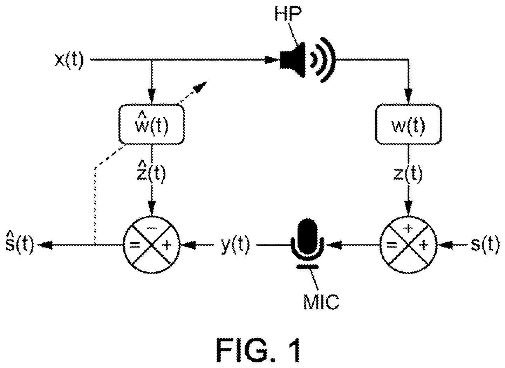

Comme présenté sur la figure 1, un équipement comporte au moins un haut-parleur HP et au moins un microphone MIC captant un signal microphonique y(t). Le haut-parleur HP est alimenté par un signal $x(t)$ qui, lorsqu'il est émis par le haut-parleur HP, est transformé par l'environnement (réverbérations éventuelles, effet Larsen, ou autres) et est capté par le microphone avec un signal utile $s(t)$ en cours d'acquisition par le microphone MIC. Ainsi, le signal microphonique $y(t)$ est composé :

- du signal utile $s(t)$ (s'agissant possiblement de données de signal de parole d'une conversation, de commandes vocales, ou autres), appelé aussi ci-après selon le contexte « signal d'intérêt $s(t)$ » ou encore « signal local s », et
- d'un signal $z(t)$, d'écho, émis par un système de reproduction sonore que comporte l'équipement et constitué d'un ou plusieurs haut-parleurs HP.

Ce signal d'écho est associé au chemin direct entre le microphone et le système de reproduction, ainsi qu'à toutes les réflexions éventuelles du signal $x(t)$ dans l'environnement de propagation.

Le chemin acoustique global peut être modélisé par un filtre w à réponse impulsionnelle finie dont la longueur dépend des caractéristiques de l'environnement de propagation de telle sorte que :

$$z(t) = x(t) * w(t)$$

L'opération consistant à ôter du signal microphonique $y(t)$ la contribution du signal d'écho $z(t)$ est appelée "annulation d'écho acoustique" (ou AEC). Un traitement pour réaliser cette opération peut consister à dériver un signal d'écho $\hat{z}(t)$ à partir de l'estimation d'un chemin acoustique $\hat{w}(t)$ : cette opération est appelée « filtrage adaptatif ». Le signal utile estimé $\hat{s}(t)$ est dérivé en retranchant le signal d'écho estimé $\hat{z}(t)$ au signal microphonique $y(t),$ comme suit :

$$\hat{s}(t) = y(t) - \hat{z}(t) = y(t) - x(t) * \hat{w}(t)$$

Le filtrage adaptatif est généralement réalisé à partir de la corrélation entre le signal microphonique et le signal du haut-parleur, en exploitant l'indépendance statistique du signal émis par le haut-parleur $x(t)$ et du signal d'intérêt $s(t)$. En pratique, il convient de mener ce traitement avec une échéance à court-terme pour traquer les changements du canal acoustique représenté par le filtre $w$ (et dénommé ci-après par commodité trajet acoustique $w$). Ces changements peuvent se manifester typiquement lorsque le locuteur se déplace dans une pièce formant l'environnement précité.

Une résultante de ce traitement à court-terme est que l'indépendance statistique entre le signal d'intérêt $s(t)$ et le signal du haut-parleur $x(t)$ peut ne plus être vérifiée dans certaines situations, sauf un cas trivial où le signal $s(t)$ est nul. En effet, cette indépendance n'est plus vraie lorsqu'elle est calculée sur des fenêtres de temps courtes de l'ordre de quelques dizaines à centaines de millisecondes, correspondant typiquement à une longueur de trame habituelle de signal numérique.

Il en résulte, dans ces situations dites de « double parole », c'est à dire lorsque le signal utile $s(t)$ est non nul, un biais dans l'estimation du canal acoustique, dégradant l'annulation d'écho. Les solutions peu complexes basées sur des traitements utilisant un gradient stochastique par exemple, tel que la technique dite "Normalized Least Mean Square" (NLMS) et ses dérivées sont très sensibles à la présence de signal local $s(t)$. Lors de ces situations de double parole, si le filtre continue à s'adapter, il peut même diverger et provoquer finalement une amplification de l'écho, à l'inverse de l'effet recherché. Aussi, pour être efficace, la solution de filtrage adaptatif doit être robuste aux situations de double parole tout en étant capable de traquer rapidement les changements de chemin acoustique.

Idéalement, ce filtrage devrait exploiter uniquement les données en jeu, à savoir le signal de référence $x(t)$ et le signal microphonique $y(t)$.

Pour pallier les situations de double parole, certains traitements connus de filtrage adaptatif mettent en œuvre des systèmes de détection de double parole (DTD). Un système de ce type est décrit par exemple dans la référence [@jung2005new] dont les détails de publication sont donnés en annexe à la fin de la présente description. De tels systèmes désactivent l'adaptation lors de périodes identifiées de double parole. Cependant, en pratique, les DTD souffrent de délai à la détection, ce qui peut amener à des remontées d'écho. D'autre part, dans ce cas précis de décision binaire, l'adaptation du filtre est figée durant la période de double-parole, ce qui est gênant en pratique si le filtre n'a pas encore terminé de converger, entraînant un écho résiduel perceptible.

D'autres méthodes ont proposé de dériver plutôt un pas d'adaptation dans l'estimation du chemin acoustique. Dans les références connues, ce pas est continu. De telles réalisations permettent, au contraire des approches par décision binaire comme les DTD, de continuer à traquer le chemin acoustique, y compris en période de double-parole. Ces types d'adaptation sont généralement dérivés par bandes de fréquences, comme suit :

$$\widehat{W}(f, k+1) = \widehat{W}(f, k) + \Delta\mathbf{W}(f, k)$$

où $\Delta\mathbf{W}$ est la mise à jour à chaque instant $k$ et à chaque fréquence $f$ du canal acoustique estimé $\widehat{W}(f,k)$ .

Le fait de travailler en fréquence permet d'une part de rendre la convergence plus uniforme sur toute l'étendue fréquentielle considérée. D'autre part, la parcimonie spectrale des signaux permet de continuer à estimer le canal acoustique dans une bande de fréquences tout en figeant l'estimation dans une autre. Certaines méthodes appelées « Variable Step-Size » ou VSS proposent de moduler l'adaptation $\Delta\mathbf{W}$ en fonction de différents critères.

Il a été tenté de lisser l'adaptation stochastique en gelant les itérations jugées trop aléatoires afin d'éviter notamment les mises-à-jour aléatoires dues à la présence de double-parole.

Il a été tenté aussi de mesurer directement le taux de présence de parole locale, sous forme de ratio entre l'énergie du signal local $\hat{\sigma}_y^2(t)$ et celle du signal d'écho $\hat{\sigma}_z^2(t)$, mais cette adaptation devient figée lorsque ce ratio est trop important. Les estimations des variances $\hat{\sigma}_y^2(t)/\hat{\sigma}_z^2(t)$ étant particulièrement bruitées, leur exploitation directe dans la modulation du pas d'adaptation rend en pratique ces approches peu efficaces : elles figent trop l'adaptation, ralentissant la vitesse de convergence, ou elles limitent trop faiblement la désadaptation en période de double parole.

D'autres méthodes se basent sur une solution optimale de pas d'adaptation qui garantit une variance minimale du filtre estimé, en vue d'un écho minimal. Ce critère est nommé « BLUE » pour "Best Linear Unbiased Estimate" [@trump1998frequency]. La mise à jour du chemin acoustique ($\Delta\mathbf{W}^{(k)}$) dans le processus de filtrage adaptatif suivant ce critère permet de limiter l'écho résiduel lié aux variations du filtre adaptatif autour de sa solution (minimum en variance). Toutefois, en pratique, l'expression de BLUE dépend des statistiques au second-ordre du signal $s(t)$ (et plus précisément sa matrice d'autocorrélation statistique $\Gamma_s$) qui sont non seulement inconnues et généralement variables dans le temps comme c'est le cas pour des signaux non stationnaires comme la parole typiquement [@van2007double]. La solution présentée dans [@trump1998frequency] n'est donc pas encore pleinement satisfaisante.

**Résumé**

L'invention vient améliorer la situation.

Il est proposé un procédé de traitement d'un signal selon la revendication 1.

Une telle mise en œuvre offre, comme détaillé plus loin, une solution d'annulation d'écho acoustique, qui est robuste aux situations de double parole notamment.

L'invention revendiquée propose aussi un programme selon la revendication 14. Elle vise aussi un dispositif de traitement d'un signal selon la revendication 5. Des mises en œuvre préférentielles sont définies par les revendications dépendantes.

**Brève description des dessins**

D'autres caractéristiques, détails et avantages apparaîtront à la lecture de la description détaillée ci-après, et à l'analyse des dessins annexés, sur lesquels :

**Fig. 1**
[Fig. 1] montre un équipement dans le cadre duquel l'objet de la présente description peut être mis en œuvre, selon un mode de réalisation.
**Fig. 2**

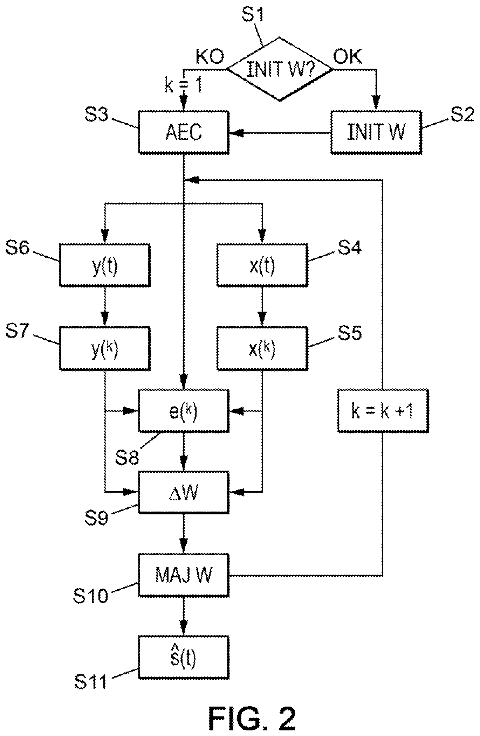

[Fig. 2] montre un traitement selon un mode de réalisation pour délivrer le signal utile précité.
**Fig. 3**

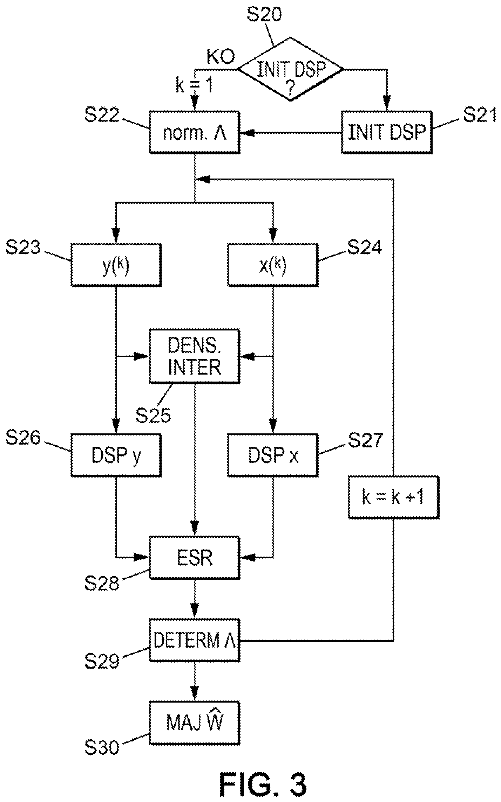

[Fig. 3] montre un traitement selon un mode de réalisation pour délivrer une mise à jour de l'estimation du chemin acoustique, précité.

**Fig. 4**

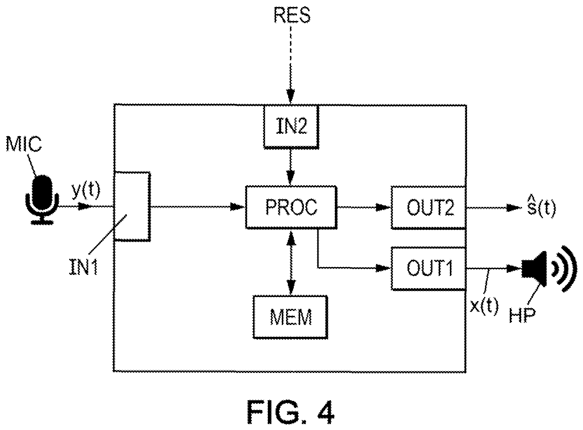

[Fig. 4] montre un dispositif pour une mise en œuvre de l'objet de la présente description, selon un mode de réalisation.

**Description des modes de réalisation**

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

La présente description propose ci-après une solution d'annulation d'écho acoustique robuste aux situations de double parole. Elle repose sur un traitement de filtrage adaptatif par exemple de type NLMS, appliqué successivement à chaque trame d'une succession de trames typiquement. On entend ici par trame un nombre donné d'échantillons successifs du signal alimentant le haut-parleur x(t), ce signal étant présumé numérique bien entendu.

Dans un mode de réalisation, le filtre utilisé pour le filtrage adaptatif est partitionné (la longueur de chaque partition pouvant correspondre ou non à la longueur d'une trame), préférentiellement dans le domaine fréquentiel (technique dite ici "Partitioned-Block Frequency Domain NLMS", ou « PBFD-NLMS »). Une technique de ce type est présentée par exemple dans la référence [@borrallo1992implementation].

Plus particulièrement ici, la solution se base sur une dérivation du pas optimal BLUE, mais en estimant les statistiques nécessaires directement des signaux de référence et microphonique sans ajout d'information auxiliaire. Cela permet de calculer $\Delta\mathbf{W}^{(k)}$ sans modèle de prédiction d'erreur ou d'a *priori* sur le chemin acoustique comme ce peut être le cas dans les références de l'art antérieur dont notamment [@gil2014frequency].

Une telle réalisation garantit, sans information auxiliaire autre que celles inférées directement par le traitement lui-même, à la fois une convergence proche de l'optimal au sens de la vitesse de convergence, un biais nul à la convergence et une absence de divergence en situation de double-parole.

Le filtrage adaptatif, lorsqu'il est exprimé dans le domaine fréquentiel, permet notamment de contrôler et normaliser la mise à jour du chemin acoustique indépendamment de la bande de fréquence en jeu. Ainsi, en plus d'une complexité réduite, la solution bénéficie d'une convergence plus uniforme sur toute l'étendue fréquentielle considérée.

Le fonctionnement par partition associé au filtrage dans le domaine fréquentiel permet en outre d'estimer à chaque itération du traitement une représentation temps-fréquence $\mathbf{W}^{(k)}$ du chemin acoustique w. Il permet de mettre en œuvre des stratégies d'adaptation différentes selon les partitions. Il permet aussi de garantir une meilleure convergence dans le cas de filtres très longs.

Un tel traitement permet de dériver un pas qui optimise à la fois le comportement en situation de double parole et le suivi de canal acoustique.

La figure 2 présente les différentes étapes de la solution de filtrage adaptatif. À chaque fois qu'une itération du traitement de filtrage adaptatif est réalisée, une trame de L nouveaux échantillons des signaux x(t) et y(t) est considérée et L nouveaux échantillons de ŝ(t) sont produits. A l'étape S1, il est déterminé s'il est besoin d'initialiser le chemin acoustique à considérer (par exemple en début de conversation d'un locuteur avec son interlocuteur), auquel cas l'initialisation du chemin acoustique intervient à l'étape S2. Sinon, à l'étape S3 on commence directement le traitement d'annulation d'écho acoustique AEC. A l'étape S4, on récupère une trame temporelle du signal de référence x(t) et on lui applique dans l'exemple décrit une projection dans le domaine fréquentiel, dans le domaine des sous-bandes de fréquences, à l'étape S5 pour en obtenir une représentation fréquentielle $\mathbf{x}^{(k)}$. Un traitement similaire est opéré avec chaque trame temporelle du signal du microphone y(t) (étape S6) pour obtenir une projection $\mathbf{y}^{(k)}$ dans le domaine des fréquences à l'étape S7. A partir des trames x(t) et y(t) (ou comme décrit ici à partir de leur représentation fréquentielle), on applique à l'étape S8 un traitement d'annulation d'écho pour estimer une erreur a priori $e^{(k)}$, comme suit.

On décrit ci-après un mode de réalisation d'un filtrage adaptatif pour une annulation d'écho en élaborant le filtre par partitions selon la technique "partitioned-block".

En considérant un chemin acoustique cible modélisé par un filtre w(t) à réponse impulsionnelle finie d'une longueur de N échantillons et découpé en $B = \frac{N}{L}$ $(B \in \mathbb{N}^*)$ partitions $w_b \in \mathbb{R}^L$, on peut estimer la matrice $\mathbf{W} \in \mathbb{C}^{M \times B}$ correspondant aux transformées fréquentielles des partitions $w_b$ telles que :

$$\mathbf{W} = [\mathbf{w}_1, \ldots, \mathbf{w}_B], \mathbf{w}_b \in \mathbb{C}^M,$$

avec $\mathbf{w}_b = \mathbf{F}w_b$, $\mathbf{F} \in \mathbb{C}^{M \times L}$, $M \geq L$.

$\mathbf{F}$ est la matrice de transformation de domaine, par exemple ici de transformée de Fourier discrète (DFT) redondante telle que chaque élément est caractérisé par : $\mathbf{F}_{ml} = e^{\left(-j\frac{2\pi ml}{M}\right)}$. En pratique, la redondance est réalisée grâce à une complétion de zéros dans le domaine temporel.

De la même manière, on considère $x_b \in \mathbb{R}^M$ une trame temporelle contenant M échantillons du signal de référence $x(t)$ et on forme la matrice $\mathbf{X} \in \mathbb{C}^{M \times B}$ correspondant aux transformées fréquentielles des B dernières trames $x_b$ telles que :

$$\mathbf{X} = [\mathbf{x}_1, \ldots, \mathbf{x}_B], \mathbf{x}_b \in \mathbb{C}^M,$$

avec $\mathbf{x}_b = \mathbf{F}x_b$.

En considérant en outre une trame temporelle $y \in \mathbb{R}^L$ du signal microphonique $y(t)$, on peut noter le vecteur $\mathbf{y} \in \mathbb{C}^M$ tel que :

$$\mathbf{y} = \mathbf{F} \begin{bmatrix} \mathbf{0}_{M-L} \\ y \end{bmatrix}$$

Pour éviter les problèmes liés aux opérations de convolution effectuées dans le domaine fréquentiel, le traitement repose sur un fonctionnement par sauvegarde/recouvrement (overlap-save OLS). Ici, l'exposant $.^{(k)}$ reflète la k-ième itération du traitement. Après initialisation de $\mathbf{W}^{(0)}, \mathbf{X}^{(0)}, \mathbf{y}^{(0)}$ et des autres caractéristiques, le traitement peut se poursuivre par le calcul de l'erreur a priori $e^{(k)} \in \mathbb{R}^M$ :

$$e^{(k)} = \begin{bmatrix} \mathbf{0}_{M-L} \\ y^{(k)} \end{bmatrix} - \begin{bmatrix} \mathbf{0}_{M-L} \\ \mathbf{1}_L \end{bmatrix} \mathbf{F}^H \sum_{b=1}^{B} \left( \mathbf{w}_b^{(k)} \circ \mathbf{x}_b^{(k)^*} \right)$$

où « o » dénote ici le produit de Hadamard, et $(.)^*$ le conjugué d'une matrice ou d'un vecteur.

Comme indiqué précédemment, la redondance de la DFT est réalisée grâce à une complétion de zéros (ou « zero-padding ») qui se retrouve dans l'expression de l'erreur a priori et qui permet avantageusement d'éviter un artefact dû à une convolution circulaire.

Le procédé se poursuit ensuite par le calcul de la mise à jour du chemin acoustique $\Delta \mathbf{W}^{(k)} = \begin{bmatrix} \Delta \mathbf{w}_1^{(k)} & \ldots & \Delta \mathbf{w}_B^{(k)} \end{bmatrix} \in \mathbb{C}^{M \times B}$ à l'étape S9, comme suit :

$$\Delta \mathbf{w}_b^{(k)} = \mathbf{G} \Lambda_b^{(k)} \circ \mathbf{x}_b^{(k)^*} \circ \mathbf{F}e^{(k)}, \text{ avec } \Lambda^{(k)} = \begin{bmatrix} \Lambda_1^{(k)} & \ldots & \Lambda_B^{(k)} \end{bmatrix} \in \mathbb{R}^{M \times B}, \mathbf{G} \in \mathbb{R}^{M \times M}$$

Dans une réalisation où la mise à jour est optimale (grâce au zero-padding), on pose $\mathbf{G} = \mathbf{F}\mathbf{F}^H$ (mise à jour dite « contrainte »).

Dans une réalisation où la mise à jour est sous-optimale, on peut poser plutôt $\mathbf{G} = \mathbf{I}_M$ (mise à jour dite « non-contrainte »). Une telle réalisation présente l'avantage d'être moins consommatrice de ressources.

L'étape S10 vise ensuite le calcul de $\mathbf{W}^{(k+1)}$ pour mettre à jour le chemin acoustique :

$$\mathbf{W}^{(k+1)} = \mathbf{W}^{(k)} + \Delta \mathbf{W}^{(k)}$$

Et à l'étape S11, le signal utile $\hat{s}(t) = y(t) - x(t) * \hat{w}(t)$ s'obtient après convolution de $x^{(k)}$ par $\mathbf{W}^{(k)}$ et ramenée dans le domaine temporel.

La figure 3 détaille l'étape de calcul de la mise à jour du chemin acoustique $\mathbf{W}^{(k)}$, en particulier le terme de normalisation optimal $\Lambda$ permettant la robustesse intrinsèque aux situations de double parole.

Pour que la solution d'annulation d'écho soit robuste aux situations décrites plus haut. On choisit un terme de normalisation spectrale $\Lambda^{(k)}$ qui satisfait le critère BLUE. Celui-ci peut être atteint grâce à la connaissance des densités spectrales de puissance (DSP) du signal microphonique $x(t)$ et du signal local $s(t)$.

Dans la référence [@van2007double], BLUE est obtenu au prix d'hypothèses fortes sur le signal local qui doit admettre un modèle autorégressif, considéré comme étant de la parole, et à l'utilisation d'une méthode de prédiction d'erreur. D'autre part [@trump1998frequency] atteint BLUE en estimant la DSP du signal local à posteriori grâce au signal d'erreur uniquement $e^{(k)}$, ceci au prix d'une moindre stabilité et d'un fonctionnement également avec de fortes contraintes sur le signal local (bruit coloré stationnaire).

La solution proposée, explicitée ci-après, s'affranchit des contraintes utilisées plus haut grâce à une estimation robuste au fil de l'eau des DSP.

Considérant : - $\mathbf{\Gamma_x} = \begin{bmatrix} \mathbf{\Gamma_{x_1}} & ... & \mathbf{\Gamma_{x_B}} \end{bmatrix} \in \mathbb{R}^{M \times B}$ (resp. $\mathbf{\Gamma_y} \in \mathbb{R}^M$) l'estimation de densité spectrale de puissance (DSP) de **X** pour chaque fréquence et chaque partition (resp. de **y** pour chaque fréquence) et

- l'inter-spectre du signal microphonique et du signal de référence $\mathbf{yX} = \begin{bmatrix} \mathbf{y \circ x_1} & ... & \mathbf{y \circ x_B} \end{bmatrix} \in \mathbb{C}^{M \times B}$ et sa densité inter-spectrale de puissance $\mathbf{\Gamma_{yX}} = E\{\mathbf{yX}\} \in \mathbb{C}^{M \times B}$, on désigne par $\mathbf{\Gamma_s} \in \mathbb{R}^{M \times B}$ la densité spectrale de puissance du signal local s pour chaque fréquence et chaque partition.

On note enfin $\mathbf{P}_{ESR} \in \mathbb{R}^{M \times B}$ (ESR pour « Echo-to-Signal Ratio ») la matrice exprimant, pour chaque bande de fréquences et chaque partition, le rapport des énergies de l'écho et du signal local. Après initialisation de $\mathbf{\Gamma_x}^{(0)}, \mathbf{\Gamma_y}^{(0)}, \mathbf{\Gamma_{yX}}^{(0)}, \mathbf{\Gamma_s}^{(0)}, \mathbf{P}_{ESR}^{(0)}$ et des autres caractéristiques, le traitement réalise les opérations suivantes :

- Estimation des densités spectrales de puissance (DSP) :

$$\mathbf{\Gamma_{x_b}}^{(k)} = \alpha \mathbf{\Gamma_{x_b}}^{(k-1)} + (1-\alpha)|\mathbf{x_b}|^2, \text{ où } |\mathbf{x_b}|^2 = \begin{bmatrix} |\mathbf{x_b}(1)|^2 \\ \vdots \\ |\mathbf{x_b}(M)|^2 \end{bmatrix}$$

$$\mathbf{\Gamma_y}^{(k)} = \eta \mathbf{\Gamma_y}^{(k-1)} + (1-\eta)|\mathbf{y}|^2, \text{ où } |\mathbf{y}|^2 = \begin{bmatrix} |\mathbf{y}(1)|^2 \\ \vdots \\ |\mathbf{y}(M)|^2 \end{bmatrix}$$

$$\mathbf{\Gamma_{yX}}^{(k)}(f,b) =$$

$$\begin{cases} \xi \mathbf{\Gamma_{yX}}^{(k-1)}(f,b) + (1-\xi)|\mathbf{yX}(f,b)|^2 & \text{si } \mathbf{\Gamma_{yX}}^{(k-1)}(f,b) \leq |\mathbf{yX}(f,b)|^2, \\ \left( \delta \sqrt{\mathbf{\Gamma_{yX}}^{(k-1)}(f,b)} + (1-\delta)|\mathbf{yX}(f,b)| \right)^2 & \text{sinon} \end{cases},$$

avec $\{\alpha, \delta, \eta, \xi\} \in ]0,1]$

- Estimation du rapport Echo-à-Signal (ESR) instantané :

$$\mathbf{P}_{ESR}^{(k)}(f,b) = \beta \frac{\mathbf{\Gamma_y}^{(k)}(f)}{\mathbf{\Gamma_s}^{(k-1)}(f,b)} \circ \frac{\mathbf{P}_{ESR}^{(k-1)}(f,b)}{1 + \mathbf{P}_{ESR}^{(k-1)}(f,b)} + (1-\beta)\left( \frac{\mathbf{\Gamma_{yX}}^{(k)}(f,b)}{\mathbf{\Gamma_x}^{(k)}(f,b)} \circ \frac{1}{\mathbf{\Gamma_s}^{(k-1)}(f,b)} \right),$$

avec $\beta \in ]0,1]$.

- Estimation de la normalisation $\Lambda^{(k)}$ :

$$\mathbf{\Gamma}_{\mathbf{s}}^{(k)}(f,b) = \begin{cases} \frac{\mathbf{\Gamma}_{\mathbf{y}}^{(k)}(f)}{1+\mathbf{P}_{\mathrm{ESR}}^{(k)}(f,b)} & \text{si} \quad \mathbf{P}_{\mathrm{ESR}}^{(k)}(f,b) \leq 10^{10}, \\[2em] \mathbf{\Gamma}_{\mathbf{s}}^{(k-1)}(f,b) & \text{sinon.} \end{cases}$$

Puis, en appliquant le procédé au sens de la présente description, le paramètre de normalisation, pour respecter le critère BLUE, s'exprime par :

$$\mathbf{\Lambda}^{(k)}(f,b) = \frac{\mu}{\mathbf{\Gamma}_{\mathbf{x}}^{(k)}(f,b)+\gamma\mathbf{\Gamma}_{\mathbf{s}}^{(k)}(f,b)}, \gamma \in \mathbb{R}^{+} ,$$

avec $\mu \in [0,2[$.

Cette dernière expression du paramètre de normalisation fait intervenir le terme $\mathbf{\Gamma}_{\mathbf{s}}^{(k)}$ qui est fonction de l'estimation du rapport écho-à-signal qui finalement peut être le seul paramètre (avec bien entendu le signal $x(t)$) à estimer au sens de la présente description, pour chaque trame $k$.

Il convient de noter qu'autrement, en appliquant plutôt l'enseignement de l'état de l'art tel que décrit par exemple dans [@borrallo1992implementation] pour mettre en œuvre la technique classique de PBFD-NLMS, le paramètre de normalisation du filtre s'exprimerait alors comme suit: $\mathbf{\Lambda}^{(k)}(f,b) = \frac{\mu}{|\mathbf{x}_{b}(f)|^2}$ , avec $\mu \in [0,2[$, sans faire intervenir de mesure pour une estimation du rapport écho-à-signal.

En reprenant maintenant les étapes de la figure 3, la première étape S20 commence par un test pour déterminer s'il est besoin d'initialiser les estimations de densité spectrale de puissance. Si tel est le cas à l'étape S21, on procède à l'initialisation des densités spectrales respectives du signal du microphone y et du signal de référence x. Sinon, on lance directement à l'étape S22 la procédure d'estimation du facteur de normalisation spectrale Λ. A l'étape S23 on récupère la trame courante fréquentielle du signal du microphone et à l'étape S24 on récupère la trame courante fréquentielle du signal de référence, pour estimer à l'étape S25 la densité inter-spectrale précitée. Ensuite, à l'étape S26 on estime la densité spectrale de puissance du signal du microphone et à l'étape S27 on estime la densité spectrale de puissance du signal de référence, pour en déduire, comme décrit ci-avant, une estimation du rapport Echo-à-Signal (ESR) instantané à l'étape S28. On en déduit à l'étape S29 une estimation du facteur de normalisation spectrale $\Lambda^{(k)}$, à partir de laquelle on peut déterminer la mise à jour du chemin acoustique à l'étape S30 : $\Delta \mathbf{w}_{b}^{(k)} = \mathbf{G}\mathbf{\Lambda}_{b}^{(k)} \circ \mathbf{x}_{b}^{*} \circ \mathbf{F}e^{(k)}$

Atteindre le critère BLUE avec le filtrage adaptatif réalisé dans le domaine temporel revient de façon générale à trouver une solution $\widehat{w} \in \mathbb{R}^{N \times 1}$ telle que :

$$\widehat{w} = \operatorname{argmin}_{w}((y - w^{T}\mathrm{x})R_{s}^{-1}(y - w^{T}\mathrm{x})^{T}),$$

où $y \in \mathbb{R}^{1 \times M}$ est le vecteur du signal microphonique, $\mathrm{x} = \begin{bmatrix} x(t) & \dots & x(t-M+1) \\ \vdots & \ddots & \vdots \\ x(t-N+1) & \dots & x(t-M-N+2) \end{bmatrix} \in \mathbb{R}^{N \times M}$ est la matrice du signal haut-parleur et $R_{s} \in \mathbb{R}^{M \times M}$ est la matrice d'autocorrélation du signal s,

Les méthodes actuelles d'annulation d'écho sont basées sur un filtrage adaptatif dans le domaine fréquentiel. L'approche présentée dans [@trump1998frequency] propose d'atteindre une version régularisée du critère BLUE en cherchant une solution de canal acoustique ŵ dans le domaine fréquentiel telle que :

$$\widehat{\mathbf{w}} = \operatorname{argmin}_{\mathbf{w}}((\mathbf{y} - \mathbf{w} \circ \mathbf{x}^{*})^{H}(\lambda\mathbf{\Gamma}_{\mathbf{s}} + \mathbf{\Gamma}_{\mathbf{x}})^{-1}(\mathbf{y} - \mathbf{w} \circ \mathbf{x}^{*})),$$

où $\Gamma_{\mathbf{s}}$ (resp. $\Gamma_{\mathbf{x}}$) est la matrice diagonale de la densité spectrale de puissance du signal **s** (resp. **x**).

Toutefois, le signal local **s** n'est pas connu. L'estimateur satisfaisant le critère BLUE est alors, en pratique, très difficile à obtenir sans autres informations ou modèle sur **s**.

Une solution telle que décrite dans [@borrallo1992implementation] ne peut produire quant à elle une estimation non biaisée (satisfaisant donc le critère BLUE) du canal acoustique $\hat{\mathbf{W}}$ que si le signal local s et le signal de référence **x** sont décorrélés, soit $E\{\mathbf{X}\mathbf{s}^T\} = \mathbf{0}$ (avec $E\{\cdot\}$ représentant l'opérateur d'espérance). En pratique, cette condition ne peut être remplie que si le signal s est un bruit blanc. Dans toutes les autres situations, afin d'atteindre une estimation non biaisée $\hat{\mathbf{W}}$, il est nécessaire d'ajouter au dénominateur du facteur de normalisation $\Lambda^{(k)}$ une fraction de la variance du signal local s, soit : $E\{\mathbf{s}\mathbf{s}^H\}$ ou sa densité spectrale de puissance (DSP) dans le domaine fréquentiel (qui prend la forme du paramètre $\mathbf{\Gamma_s} \in \mathbb{R}^{M\times B}$ dans les équations présentées plus haut).

L'espérance $E\{\mathbf{s}\mathbf{s}^H\}$ étant inconnue, la solution proposée ici s'affranchit des contraintes utilisées plus haut grâce à une estimation robuste au fil de l'eau des densités spectrales de puissance, et en particulier de celle qui intervient au dénominateur précité : $\mathbf{\Gamma_s}$, la densité spectrale de puissance du signal local s.

Le traitement tel que décrit ci-avant peut être utilisé dans notamment les situations où il est nécessaire d'effectuer une captation et une restitution sonore simultanée. Les cas d'usage les plus courants sont la téléphonie mains-libres (le locuteur distant entendant sa propre voix retardée - l'écho - mélangée avec la voix de son interlocuteur), les interactions avec assistants vocaux (les réponses du système de dialogue et/ou la musique diffusée sur l'assistant vocal étant mixées avec les commandes émises par l'utilisateur et perturbant la reconnaissance vocale), l'interphonie, les systèmes de vidéo-conférence, et autres.

On a représenté sur la figure 4 un dispositif pour la mise en œuvre du procédé ci-avant, qui peut être illustré aussi par les deux modules de gauche de la figure 1 (filtrage adaptatif et soustraction appliquée au signal $y(t)$ capté par le microphone). En référence à la figure 4, ce dispositif peut comporter typiquement une première interface d'entrée IN1 pour recevoir le signal $y(t)$ acquis du microphone MIC, ainsi qu'une deuxième interface d'entrée IN2, dans l'exemple représenté, pour recevoir un signal (par exemple un signal de télécommunication, de type signal vocal ou musical) à restituer sur un haut-parleur HP. Le dispositif comporte un processeur PROC apte à coopérer avec une mémoire MEM pour traiter ce signal audio et délivrer, via une première interface de sortie OUT1 que comporte le dispositif, le signal $x(t)$ destiné à alimenter le haut-parleur HP. En particulier, la mémoire MEM stocke au moins des données d'instructions d'un programme d'ordinateur selon un aspect de la présente description, ces données d'instructions étant lisibles par le processeur PROC pour exécuter le traitement décrit ci-avant et l'appliquer notamment au signal issu du microphone $y(t)$ pour en délivrer un signal utile $s(t)$ via une deuxième interface de sortie OUT2 que comporte le dispositif dans un exemple de réalisation.

Bien entendu, il s'agit d'un exemple de réalisation, où typiquement ici le signal utile $s(t)$ peut être transmis via l'interface de sortie OUT2 à un interlocuteur distant par exemple. Cette interface OUT2 peut être reliée dans ce cas à une antenne de communication ou à un routeur d'un réseau de télécommunication RES par exemple. Il en est de même pour l'interface d'entrée IN2 recevant « de l'extérieur » un signal à restituer sur le haut-parleur.

Dans un dispositif tel que par exemple un assistant vocal, il est possible typiquement d'être aussi en situation de double parole lorsque l'utilisateur prononce des commandes vocales en même temps que l'assistant répond par exemple à des commandes antérieures. Dans ce cas, au moins une partie des réponses de l'assistant vocal peuvent être issues en local du contenu de la mémoire MEM par exemple sans avoir recours à un serveur distant et à un réseau de télécommunications. En outre, le signal utile $s(t)$ peut être interprété simplement par le processeur PROC en local pour répondre à des commandes vocales de l'utilisateur. Ainsi, les interfaces IN2 et OUT2 peuvent ne pas être nécessaires.

Un cas d'usage typique du traitement dit « de la double parole » avec un assistant vocal consiste par exemple à écouter de la musique à travers l'enceinte de l'assistant vocal, alors que l'utilisateur prononce une commande d'éveil de l'assistant (WakeUpWord). Dans ce cas, il convient de supprimer la musique restituée $x(t)*w(t)$ du signal sonore capté $y(t)$ dans un environnement (avec ses réverbérations) dans lequel l'assistant vient d'être placé, pour pouvoir détecter correctement le signal de commande réellement prononcé $s(t)$.

Bien entendu, la présente invention ne se limite pas à la forme de réalisation présentée ci-avant, et peut s'étendre à d'autres variantes.

Par exemple, on a décrit ci-avant une réalisation pratique dans laquelle les signaux sont traités dans le domaine des sous-bandes fréquentielles. Néanmoins l'invention peut être implémentée, en variante possible, dans le domaine temporel en exploitant un paramètre tel que l'espérance $E\{\mathbf{s}\mathbf{s}^T\}$ équivalent à $\mathbf{\Gamma_s}$ la densité spectrale de puissance du signal local s dans le domaine fréquentiel.

Par conséquent les estimations de densités spectrales de puissances précitées peuvent effectivement être mises en œuvre dans une implémentation possible, mais non nécessaire.

Il en est de même pour la partition du filtre adaptatif, qui peut fonctionner également dans le domaine des sous-bandes mais qui n'est pas nécessaire non plus.

Par ailleurs, sur la figure 4, on a représenté un équipement compact comportant le dispositif d'annulation d'écho (pouvant être illustré ainsi par le processeur PROC, la mémoire MEM et au moins une interface d'entrée et au moins une interface de sortie), ainsi que le microphone MIC et le haut-parleur HP. Dans une variante de réalisation le dispositif d'une part et un ou plusieurs microphones et un ou plusieurs haut-parleurs d'autre part peuvent être situés en des sites différents, reliés par un réseau de télécommunication par exemple ou un réseau local (animé par une passerelle domestique), ou

# EP 4 229 636 B1

autres.

**ANNEXE : Références**

[@borrallo1992implementation] : Borrallo, J. P., & Otero, M. G. (1992). On the implementation of a partitioned block frequency domain adaptive filter (PBFDAF) for long acoustic echo cancellation. Signal Processing, 27(3), 301-315.

[@trump1998frequency] : Trump, T. (1998, May). A frequency domain adaptive algorithm for colored measurement noise environment. In Proceedings of the 1998 IEEE International Conference on Acoustics, Speech and Signal Processing, ICASSP'98 (Cat. No. 98CH36181) (Vol. 3, pp. 1705-1708). IEEE.

[@jung2005new] : Jung, H. K., Kim, N. S., & Kim, T. (2005). A new double-talk detector using echo path estimation. Speech communication, 45(1), 41-48.

[@van2007double] : Van Waterschoot, T., Rombouts, G., Verhoeve, P., & Moonen, M. (2007). Double-talk-robust prediction error identification algorithms for acoustic echo cancellation. IEEE Transactions on Signal Processing, 55(3), 846-858.

[@gil2014frequency] : Gil-Cacho, J. M., Van Waterschoot, T., Moonen, M., & Jensen, S. H. (2014). A frequency-domain adaptive filter (FDAF) prediction error method (PEM) framework for double-talk-robust acoustic echo cancellation. IEEE/ACM Transactions on Audio, Speech, and Language Processing, 22(12), 2074-2086.

## Revendications

1. Procédé de traitement d'un signal $y(t)$ issu d'au moins un microphone (MIC) d'un équipement, l'équipement comportant en outre au moins un haut-parleur (HP) destiné à être alimenté par un signal $x(t)$,

   le traitement dudit signal $y(t)$ issu du microphone (MIC) comportant, pour limiter un effet d'écho, une détermination d'une estimation $\hat{s}(t)$ d'un signal utile $s(t)$ par retranchement au signal $y(t)$ issu du microphone (MIC) d'une estimation d'un signal d'écho $x(t) * \hat{w}(t)$ donnée par l'application d'un filtre $\hat{w}(t)$ au signal $x(t)$ d'alimentation du haut-parleur, le filtre $\hat{w}(t)$ étant adaptatif par pas variable pour tenir compte d'une évolution dans le temps d'un chemin acoustique $w(t)$ du haut-parleur vers le microphone,
   procédé dans lequel :

   * le signal $x(t)$ d'alimentation du haut-parleur est obtenu sous la forme d'une succession dans le temps de trames d'échantillons de signal, et
   * le filtre adaptatif $\hat{w}(t)$ est élaboré à chaque trame $k$ d'échantillons en fonction d'une mise à jour $\Delta\mathbf{W}^{(k)}$ du chemin acoustique $w(t)$ pour cette trame k et en appliquant une normalisation $\Lambda$ respectant un critère choisi pour une variance minimale,

   dans lequel le filtre adaptatif est élaboré dans un domaine de sous-bandes fréquentielles $f$, le procédé étant **caractérisé en ce que** ladite normalisation $\Lambda^{(k)}$ est définie en fonction :

   - d'une densité spectrale de puissance $\mathbf{\Gamma}_{\mathbf{x}}^{(k)}$ du signal $\mathbf{x}$ alimentant le haut-parleur, et

   - d'une densité spectrale de puissance $\mathbf{\Gamma}_{\mathbf{s}}^{(k)}$ du signal utile $\mathbf{s}$, obtenue à partir d'une densité spectrale de puissance $\mathbf{\Gamma}_{\mathbf{y}}^{(k)}$ du signal $\mathbf{y}$ capté par le microphone et d'un rapport d'énergies d'écho à signal $\mathbf{P}_{\mathrm{ESR}}^{(k)}$ estimé en fonction d'une densité inter-spectrale de puissance $\mathbf{\Gamma}_{\mathbf{yX}}^{(k)}$ entre le signal $\mathbf{y}$ issu du microphone et le signal $\mathbf{X}$ destiné à alimenter le haut-parleur.

2. Procédé selon la revendication 1, dans lequel le critère choisi est de type « BLUE » pour "Best Linear Unbiased Estimate".

3. Procédé selon l'une des revendications précédentes, dans lequel, dans une représentation matricielle où f désigne un indice de ligne et b un indice de colonne, la normalisation $\Lambda^{(k)}(f, b)$ est donnée par :

$$\Lambda^{(\mathrm{k})}(f,b) = \frac{\mu}{\Gamma_{\mathbf{x}}^{(\mathrm{k})}(f,b)+\gamma\Gamma_{\mathbf{s}}^{(\mathrm{k})}(f,b)},$$

avec $\mu \in [0,2[$, et où $\gamma$ est un coefficient positif choisi.

4. Procédé selon l'une des revendications précédentes, dans lequel, dans une représentation matricielle où f désigne un indice de ligne et b un indice de colonne, la densité spectrale de puissance $\mathbf{\Gamma}_{\mathbf{s}}^{(k)}$ du signal utile **s** est donnée par :

$$\mathbf{\Gamma}_{\mathbf{s}}^{(k)}(f,b) = \begin{cases} \dfrac{\mathbf{\Gamma}_{\mathbf{y}}^{(k)}(f,b)}{1 + \mathbf{P}_{\mathrm{ESR}}^{(k)}(f,b)} & \text{si} \quad \mathbf{P}_{\mathrm{ESR}}^{(k)}(f,b) \leq A, \\[2em] \mathbf{\Gamma}_{\mathbf{s}}^{(k-1)}(f,b) & \text{sinon.} \end{cases}$$

où $A$ est une limite positive choisie, et $\mathbf{\Gamma}_{\mathbf{s}}^{(k-1)}(f,b)$ est la densité spectrale de puissance du signal utile **s** évaluée pour une trame précédente k-1, dans une sous-bande de fréquences f et pour la partition b.

5. Procédé selon l'une des revendications précédentes, dans lequel, dans une représentation matricielle où f désigne un indice de ligne et b un indice de colonne, la représentation $\mathbf{P}_{\mathrm{ESR}}^{(k)}$ du rapport d'énergies d'écho à signal est donnée par :

$$\mathbf{P}_{\mathrm{ESR}}^{(k)}(f,b) = \beta \, \frac{\mathbf{\Gamma}_{\mathbf{y}}^{(k)}(f)}{\mathbf{\Gamma}_{\mathbf{s}}^{(k-1)}(f,b)} \cdot \frac{\mathbf{P}_{\mathrm{ESR}}^{(k-1)}(f,b)}{1 + \mathbf{P}_{\mathrm{ESR}}^{(k-1)}(f,b)} + (1 - \beta) \left( \frac{\mathbf{\Gamma}_{\mathbf{yX}}^{(k)}(f,b)}{\mathbf{\Gamma}_{\mathbf{x}}^{(k)}(f,b)} \cdot \frac{1}{\mathbf{\Gamma}_{\mathbf{s}}^{(k-1)}(f,b)} \right),$$

où $\beta$ est un facteur d'oubli positif et inférieur à 1, la notation $^{(k-1)}$ se référant à une expression déterminée pour une trame précédente (k-1).

6. Procédé selon la revendication 5, dans lequel la densité inter-spectrale de puissance $\mathbf{\Gamma}_{\mathbf{yX}}^{(k)}$ est donnée par :

$$\mathbf{\Gamma}_{\mathbf{yX}}^{(k)}(f,b) = \begin{cases} \xi \mathbf{\Gamma}_{\mathbf{yX}}^{(k-1)}(f,b) + (1-\xi)|\mathbf{yX}(f,b)|^2 & \text{si} \quad \mathbf{\Gamma}_{\mathbf{yX}}^{(k-1)}(f,b) \leq |\mathbf{yX}(f,b)|^2, \\[1em] \left( \delta \sqrt{\mathbf{\Gamma}_{\mathbf{yX}}^{(k-1)}(f,b)} + (1-\delta)|\mathbf{yX}(f,b)| \right)^2 & \text{sinon} \end{cases},$$

avec $\{\alpha, \delta, \eta, \xi\} \in ]0,1]$.

7. Procédé selon l'une des revendications précédentes, dans lequel les densités spectrales de puissance :

- du signal destiné à alimenter le haut-parleur, représenté par une matrice **X,** et
- du signal issu du microphone, représenté par un vecteur **y**,
sont données respectivement par :

$$\mathbf{\Gamma}_{\mathbf{x}}^{(k)} = \alpha \mathbf{\Gamma}_{\mathbf{x}}^{(k-1)} + (1-\alpha)|\mathbf{X}|^2,$$

et

$$\mathbf{\Gamma}_{\mathbf{y}}^{(k)} = \eta \mathbf{\Gamma}_{\mathbf{y}}^{(k-1)} + (1-\eta)|\mathbf{y}|^2,$$

où $\alpha$ et $\eta$ sont des facteurs d'oubli supérieurs à 0 et inférieurs à 1.

8. Procédé selon l'une des revendications précédentes, dans lequel le filtre adaptatif est un filtre w à réponse impulsionnelle finie d'une longueur de N échantillons et découpé en $B = \frac{N}{L}$ $(B \in \mathbb{N})$ partitions $w_b$ de L échantillons chacune.

9. Procédé selon la revendication 8, dans lequel on estime une matrice $\mathbf{W} \in \mathbb{C}^{M \times B}$ correspondant à une expression dans un domaine transformé des partitions $w_b$ telles que $\mathbf{W} = [\mathbf{w}_1,..., \mathbf{w}_B]$, $\mathbf{W}_b \in \mathbb{C}^M$, et représentant le filtre dans le domaine transformé, avec $\mathbf{w}_b = \mathbf{F} w_b$, $\mathbf{F} \in \mathbb{C}^{M \times L}$, $M \geq L$, où $\mathbf{F}$ est une matrice de transformation de domaine,

et dans lequel, pour chaque trame temporelle notée $x_b \in \mathbb{R}^M$, de M échantillons du signal destiné à alimenter le haut-parleur $x(t)$, on forme une matrice $\mathbf{X} \in \mathbb{C}^{M \times B}$ correspondant aux transformées des B dernières trames $x_b$ telles que $\mathbf{X} = [\mathbf{x}_1,...,\mathbf{x}_B]$, $\mathbf{X}_b \in \mathbb{C}^M$, avec $\mathbf{x}_b = \mathbf{F} x_b$, et

pour une trame temporelle $y \in \mathbb{R}^L$ du signal issu du microphone $y(t)$, on forme un vecteur $\mathbf{y} \in \mathbb{C}^M$.

10. Procédé selon la revendication 9, dans lequel le vecteur $\mathbf{y}$ est tel que :

$$\mathbf{y} = \mathbf{F} \begin{bmatrix} \mathbf{0}_{M-L} \\ y \end{bmatrix}$$

11. Procédé selon l'une des revendications 9 et 10, dans lequel la mise à jour du chemin acoustique $\varDelta \mathbf{W}^{(k)}$ pour une trame courante $k$ est donné par $\varDelta \mathbf{w}_b^{(k)} = \mathbf{G} \mathbf{\Lambda}_b^{(k)} \circ \mathbf{x}_b^{(k)*} \circ \mathbf{F} e^{(k)}$, où :

- « $\circ$ » dénote le produit de Hadamard,
- $\mathbf{G} \in \mathbb{R}^{M \times M}$ est une matrice donnée par l'une ou l'autre des équations :

$$\mathbf{G} = \mathbf{F} \mathbf{F}^H \text{ et } \mathbf{G} = \mathbf{I}_M,$$

- $\mathbf{\Lambda}^{(k)} = \begin{bmatrix} \mathbf{\Lambda}_1^{(k)} & ... & \mathbf{\Lambda}_B^{(k)} \end{bmatrix} \in \mathbb{R}^{M \times B}$, est une matrice représentant la normalisation précitée, et
- $e^{(k)}$ est une erreur a priori estimée à partir des signaux $x$ et $y$ pour la trame $k$.

12. Procédé selon la revendication 11, dans lequel l'erreur a priori est donnée par :

$$e^{(k)} = \begin{bmatrix} \mathbf{0}_{M-L} \\ y^{(k)} \end{bmatrix} - \begin{bmatrix} \mathbf{0}_{M-L} \\ \mathbf{1}_L \end{bmatrix} \mathbf{F}^H \sum_{b=1}^{B} \left( \mathbf{w}_b^{(k)} \circ \mathbf{x}_b^{(k)*} \right)$$

13. Procédé selon l'une des revendications précédentes, dans lequel le filtre adaptatif est mis à jour d'une trame courante k à une trame suivante $k+1$ en fonction d'une mise à jour du chemin acoustique $\varDelta \mathbf{W}^{(k)}$ estimée pour la trame courante $k$, selon une relation du type : $\mathbf{W}^{(k+1)} = \mathbf{W}^{(k)} + \varDelta \mathbf{W}^{(k)}$

14. Programme informatique comportant des instructions pour la mise en œuvre du procédé selon l'une des revendications 1 à 13 lorsque ce programme est exécuté par un processeur.

15. Dispositif de traitement d'un signal $y(t)$ issu d'au moins un microphone (MIC), comportant un processeur (PROC) configuré pour exécuter un procédé selon l'une des revendications 1 à 13.

**Patentansprüche**

1. Verfahren zur Verarbeitung eines Signals y(t), das von mindestens einem Mikrofon (MIC) eines Geräts stammt, wobei das Gerät außerdem mindestens einen Lautsprecher (HP) umfasst, der mit einem Signal x(t) versorgt werden soll,

   wobei die Verarbeitung des vom Mikrofon (MIC) stammenden Signals y(t) zum Begrenzen eines Echoeffekts eine Bestimmung einer Abschätzung ŝ(t) eines Nutzsignals s(t) durch Subtraktion einer Abschätzung eines Echosignals x(t) * ŵ(t), die durch die Anwendung eines Filters ŵ(t) auf das Signal x(t) zur Versorgung des Lautsprechers gegeben ist, von dem vom Mikrofon (MIC) stammenden Signal y(t) umfasst, wobei das Filter ŵ(t) mit variablem Schritt adaptiv ist, um eine zeitliche Entwicklung eines akustischen Pfades w(t) vom Lautsprecher zum Mikrofon zu berücksichtigen,
   wobei in dem Verfahren:

   * das Signal x(t) zur Versorgung des Lautsprechers in Form einer zeitlichen Abfolge von Rahmen von Signalabtastwerten erhalten wird, und
   * das adaptive Filter ŵ(t) in jedem Rahmen k von Abtastwerten in Abhängigkeit von einer Aktualisierung $\Delta W^{(k)}$ des akustischen Pfades w(t) für diesen Rahmen k und durch Anwenden einer Normierung $\Lambda$, die ein für eine minimale Varianz gewähltes Kriterium einhält, gestaltet wird,

   wobei das adaptive Filter in einem Bereich von Frequenzunterbändern f gestaltet wird, wobei das Verfahren **dadurch gekennzeichnet ist, dass** die Normierung $\Lambda^{(k)}$ definiert ist in Abhängigkeit von Folgendem:

   - einer spektralen Leistungsdichte $\Gamma_x^{(k)}$ des Signals x, das den Lautsprecher versorgt, und

   - einer spektralen Leistungsdichte $\Gamma_s^{(k)}$ des Nutzsignals s, die von einer spektralen Leistungsdichte $\Gamma_y^{(k)}$ des Signals y, das durch das Mikrofon erfasst wird, und einem Verhältnis von Echo- zu Signalenergien $P_{ESR}^{(k)}$

   erhalten wird, das in Abhängigkeit von einer interspektralen Leistungsdichte $\Gamma_{yX}^{(k)}$ zwischen dem Signal y, das vom Mikrofon stammt, und dem Signal X, das den Lautsprecher versorgen soll, abgeschätzt wird.

2. Verfahren nach Anspruch 1, wobei das gewählte Kriterium vom Typ "BLUE" für "Best Linear Unbiased Estimate" ist.

3. Verfahren nach einem der vorangehenden Ansprüche, wobei in einer Matrixdarstellung, in der f einen Zeilenindex und b einen Spaltenindex bezeichnet, die Normierung $\Lambda^{(k)}(f, b)$ gegeben ist durch:

$$\Lambda^{(k)}(f, b) = \frac{\mu}{\Gamma_x^{(k)}(f, b) + \gamma \Gamma_s^{(k)}(f, b)'}$$

   mit $\mu \in [0,2[$, und wobei $\gamma$ ein gewählter positiver Koeffizient ist.

4. Verfahren nach einem der vorangehenden Ansprüche, wobei in einer Matrixdarstellung, in der f einen Zeilenindex und b einen Spaltenindex bezeichnet, die spektrale Leistungsdichte $\Gamma_s^{(k)}$ des Nutzsignals s gegeben ist durch:

$$\Gamma_s^{(k)}(f, b) = \begin{cases} \dfrac{\Gamma_y^{(k)}(f, b)}{1 + P_{ESR}^{(k)}(f, b)} & \text{wenn} \quad P_{ESR}^{(k)}(f, b) \leq A, \\ \Gamma_s^{(k-1)}(f, b) & \text{andernfalls} \end{cases}$$

   wobei A eine gewählte positive Grenze ist und $\Gamma_s^{(k-1)}(f, b)$ die spektrale Leistungsdichte des Nutzsignals s, die für einen vorangehenden Rahmen k-1 ausgewertet wird, in einem Unterband von Frequenzen f und für die Aufteilung b ist.

5. Verfahren nach einem der vorangehenden Ansprüche, wobei in einer Matrixdarstellung, in der f einen Zeilenindex und b einen Spaltenindex bezeichnet, die Darstellung $P_{ESR}^{(k)}$ des Verhältnisses von Echo- zu Signalenergien gegeben ist durch:

$$P_{ESR}^{(k)}(f,b) = \beta \frac{\Gamma_y^{(k)}(f)}{\Gamma_s^{(k-1)}(f,b)} \cdot \frac{P_{ESR}^{(k-1)}(f,b)}{1+P_{ESR}^{(k-1)}(f,b)} + (1-\beta)\left(\frac{\Gamma_{yX}^{(k)}(f,b)}{\Gamma_x^{(k)}(f,b)} \cdot \frac{1}{\Gamma_s^{(k-1)}(f,b)}\right),$$

wobei $\beta$ ein positiver Vergessensfaktor und kleiner als 1 ist, wobei die Schreibweise $(k-1)$ sich auf einen für einen vorangehenden Rahmen (k-1) bestimmten Ausdruck bezieht.

6. Verfahren nach Anspruch 5, wobei die interspektrale Leistungsdichte $\Gamma_{yX}^{(k)}$ gegeben ist durch:

$$\Gamma_{yX}^{(k)}(f,b) = \begin{cases} \xi\Gamma_{yX}^{(k-1)}(f,b) + (1-\xi)|yX(f,b)|^2 & \text{Wenn } \Gamma_{yX}^{(k-1)}(f,b) \le |yX(f,b)|^2, \\ \left(\delta\sqrt{\Gamma_{yX}^{(k-1)}(f,b)} + (1-\delta)|yX(f,b)|\right)^2 & \text{Andernfalls} \end{cases} ,$$

mit $\{\alpha, \delta, \xi, \eta \in\}$ ]0,1].

7. Verfahren nach einem der vorangehenden Ansprüche, wobei die spektralen Leistungsdichten:

- des Signals, das den Lautsprecher versorgen soll, das durch eine Matrix X dargestellt wird, und
- des Signals, das vom Mikrofon stammt, das durch einen Vektor y dargestellt wird,
gegeben sind durch:

$$\Gamma_x^{(k)} = \alpha\Gamma_x^{(k-1)} + (1 - \alpha)|X|^2,$$

und

$$\Gamma_y^{(k)} = \eta\Gamma_y^{(k-1)} + (1 - \eta)|y|^2,$$

wobei $\alpha$ und $\eta$ Vergessensfaktoren sind, die größer als 0 und kleiner als 1 sind.

8. Verfahren nach einem der vorangehenden Ansprüche, wobei das adaptive Filter ein Filter w mit endlicher Impulsantwort mit einer Länge von N Abtastwerten, das in $B = \frac{N}{L}$ (B E N) Aufteilungen $w_b$ mit jeweils L Abtastwerten aufgeteilt ist, ist.

9. Verfahren nach Anspruch 8, wobei eine Matrix $W \in \mathbb{C}^{M \times B}$ abgeschätzt wird, die einem Ausdruck in einem transformierten Bereich der Aufteilungen $w_b$ entspricht, wie W = [$w_1$, ..., $w_B$], $W_b \in \mathbb{C}^M$, und das Filter im transformierten Bereich darstellt, mit $w_b = Fw_b$, $F \in \mathbb{C}^{M \times L}$, M ≥ L, wobei F eine Bereichstransformationsmatrix ist,

und wobei für jeden zeitlichen Rahmen, der als $x_b \in \mathbb{R}^M$ bezeichnet ist, von M Abtastwerten des Signals x(t), das den Lautsprecher versorgen soll, eine Matrix $X \in \mathbb{C}^{M \times B}$ gebildet wird, die den Transformierten der B letzten Rahmen $x_b$ entspricht, wie X = [$x_1$, ..., $x_B$], $x_b \in \mathbb{C}^M$ mit $x_b = Fx_b$, und für einen zeitlichen Rahmen $y \in \mathbb{R}^L$ des Signals y(t), das vom Mikrofon stammt, ein Vektor $y \in \mathbb{C}^M$ gebildet wird.

**10.** Verfahren nach Anspruch 9, wobei der Vektor y derart ist:

$$y = F \begin{bmatrix} 0_{M-L} \\ y \end{bmatrix}$$

**11.** Verfahren nach einem der Ansprüche 9 und 10, wobei die Aktualisierung des akustischen Pfades $\Delta W^{(k)}$ für einen aktuellen Rahmen k gegeben ist durch $\Delta w_b^{(k)} = G\Lambda_b^{(k)} \circ x_b^{(k)*} \circ Fe^{(k)}$ , wobei:

- "∘" das Hadamard-Produkt bezeichnet,

- $G \in \mathbb{R}^{M \times M}$ eine Matrix ist, die durch die eine oder die andere der folgenden Gleichungen gegeben ist: G = FF$^H$ und G = I$_M$,

- $\Lambda^{(k)} = [\Lambda_1^{(k)} \ ... \ \Lambda_B^{(k)}] \in \mathbb{R}^{M \times B}$ eine Matrix ist, die die vorstehend genannte Normierung darstellt, und
- e$^{(k)}$ ein vorheriger Fehler ist, der aus den Signalen x und y für den Rahmen k abgeschätzt wird.

**12.** Verfahren nach Anspruch 11, wobei der vorherige Fehler gegeben ist durch:

$$e^{(k)} = \begin{bmatrix} 0_{M-L} \\ y^{(k)} \end{bmatrix} - \begin{bmatrix} 0_{M-L} \\ 1_L \end{bmatrix} F^H \sum_{b=1}^{B} \left( w_b^{(k)} \circ x_b^{(k)*} \right)$$

**13.** Verfahren nach einem der vorangehenden Ansprüche, wobei das adaptive Filter von einem aktuellen Rahmen k bis zu einem folgenden Rahmen k+1 in Abhängigkeit von einer Aktualisierung des akustischen Pfades $\Delta W^{(k)}$, die für den aktuellen Rahmen k abgeschätzt wird, gemäß einer Relation des Typs: W$^{(k+1)}$ = W$^{(k)}$ + $\Delta W^{(k)}$ aktualisiert wird.

**14.** Computerprogramm, das Anweisungen enthält, um das Verfahren nach einem der Ansprüche 1 bis 13 auszuführen, wenn dieses Programm durch einen Prozessor ausgeführt wird.

**15.** Vorrichtung zur Verarbeitung eines Signals y(t), das von mindestens einem Mikrofon (MIC) stammt, mit einem Prozessor (PROC), der konfiguriert ist, ein Verfahren nach einem der Ansprüche 1 bis 13 auszuführen.

**Claims**

**1.** Method for processing a signal y(t) coming from at least one microphone (MIC) of an equipment, the equipment furthermore comprising at least one loudspeaker (HP) intended to be supplied with a signal x(t),

the processing of said signal y(t) coming from the microphone (MIC) comprising, in order to limit an echo effect, determining an estimate ŝ(t) of a payload signal s(t) by subtracting, from the signal y(t) coming from the microphone (MIC), an estimate of an echo signal x(t) * ŵ(t) given by applying a filter ŵ(t) to the signal x(t) supplied to the loudspeaker, the filter ŵ(t) being adaptive in variable steps so as to take into account a change over time of an acoustic path w(t) from the loudspeaker to the microphone,
in which method:

* the signal x(t) supplied to the loudspeaker is obtained in the form of a temporal succession of frames of signal samples, and
* the adaptive filter ŵ(t) is constructed at each frame k of samples as a function of an update $\Delta W^{(k)}$ of the acoustic path w(t) for this frame k and by applying a normalization $\Lambda$ that complies with a criterion chosen for a minimum variance,

wherein the adaptive filter is constructed in a frequency sub-band domain f, the method being **characterized in that** said normalization $\Lambda^{(k)}$ is defined as a function of:

- a power spectral density $\Gamma_x^{(k)}$ of the signal x supplied to the loudspeaker, and

- a power spectral density $\Gamma_s^{(k)}$ of the payload signal s, obtained based on a power spectral density $\Gamma_y^{(k)}$ of the signal y picked up by the microphone and an echo-to-signal energy ratio $P_{ESR}^{(k)}$ estimated as a function of a power cross-spectral density $\Gamma_{yX}^{(k)}$ between the signal y coming from the microphone and the signal X intended to be supplied to the loudspeaker.

2. Method according to Claim 1, wherein the chosen criterion is a BLUE, Best Linear Unbiased Estimate, criterion.

3. Method according to either of the preceding claims, wherein, in a matrix representation in which f denotes a row index and b denotes a column index, the normalization $\Lambda^{(k)}(f,b)$ is given by:

$$\Lambda^{(k)}(f, b) = \frac{\mu}{\Gamma_x^{(k)}(f, b) + \gamma\Gamma_s^{(k)}(f, b)'}$$

with $\mu \in [0.2[$, and where $\gamma$ is a chosen positive coefficient.

4. Method according to one of the preceding claims, wherein, in a matrix representation in which f denotes a row index and b denotes a column index, the power spectral density $\Gamma_s^{(k)}$ of the payload signal s is given by:

$$\Gamma_s^{(k)}(f, b) = \begin{cases} \dfrac{\Gamma_y^{(k)}(f, b)}{1 + P_{ESR}^{(k)}(f, b)} & \text{if } P_{ESR}^{(k)}(f, b) \leq A, \\ \Gamma_s^{(k-1)}(f, b) & \text{else.} \end{cases}$$

where A is a chosen positive limit, and $\Gamma_s^{(k-1)}(f, b)$ is the power spectral density of the payload signal s evaluated for a preceding frame k-1, in a frequency sub-band f and for the partition b.

5. Method according to one of the preceding claims, wherein, in a matrix representation in which f denotes a row index and b denotes a column index, the representation $P_{ESR}^{(k)}$ of the echo-to-signal energy ratio is given by:

$$P_{ESR}^{(k)}(f, b) = \beta \frac{\Gamma_y^{(k)}(f)}{\Gamma_s^{(k-1)}(f,b)} \cdot \frac{P_{ESR}^{(k-1)}(f,b)}{1+P_{ESR}^{(k-1)}(f,b)} + (1 - \beta)\left(\frac{\Gamma_{yX}^{(k)}(f,b)}{\Gamma_x^{(k)}(f,b)} \cdot \frac{1}{\Gamma_s^{(k-1)}(f,b)}\right),$$

where $\beta$ is a positive forgetting factor and is less than 1, the notation $(k-1)$ referring to an expression determined for a preceding frame (k-1).

6. Method according to Claim 5, wherein the power cross-spectral density $\Gamma_{yX}^{(k)}$ is given by:

$$\Gamma_{yX}^{(k)}(f, b) = \begin{cases} \xi\Gamma_{yX}^{(k-1)}(f, b) + (1 - \xi)|yX(f, b)|^2 & \text{if } \Gamma_{yX}^{(k-1)}(f, b) \leq |yX(f, b)|^2, \\ \left(\delta\sqrt{\Gamma_{yX}^{(k-1)}(f, b)} + (1 - \delta)|yX(f, b)|\right)^2 & \text{else} \end{cases},$$

with $\{\alpha, \delta, \eta, \xi\} \in ]0,1]$.

7. Method according to one of the preceding claims, wherein the power spectral densities:

   - of the signal intended to be supplied to the loudspeaker, represented by a matrix X, and
   - of the signal coming from the microphone, represented by a vector y,

   are given respectively by: $\Gamma_x^{(k)} = \alpha\Gamma_x^{(k-1)} + (1 - \alpha)|X|^2$ , and $\Gamma_y^{(k)} = \eta\Gamma_y^{(k-1)} + (1 - \eta)|y|^2$ ,

   where $\alpha$ and $\eta$ are forgetting factors greater than 0 and less than 1.

8. Method according to one of the preceding claims, wherein the adaptive filter is a finite impulse response filter w with a length of N samples and divided into $B = \dfrac{N}{L}$ $(B \in N)$ partitions $w_b$ of L samples each.

9. Method according to Claim 8, comprising estimating a matrix $W \in \mathbb{C}^{M \times B}$ corresponding to an expression in a transformed domain of the partitions $w_b$ such that $W = [w_1,...,w_B]$, $w_b \in \mathbb{C}^M$, and representing the filter in the transformed domain, with $w_b = Fw_b$, $F \in \mathbb{C}^{M \times L}$, $M \geq L$, where F is a domain transformation matrix,

   and comprising, for each time frame denoted $x_b \in \mathbb{R}^M$, of M samples of the signal intended to be supplied to the loudspeaker x(t), forming a matrix $X \in \mathbb{C}^{M \times B}$ corresponding to the transforms of the last B frames $x_b$ such that $X = [x_1,...,x_B]$, $x_b \in \mathbb{C}^M$, with $x_b = Fx_b$, and

   for a time frame $y \in \mathbb{R}^L$ of the signal coming from the microphone y(t), forming a vector $Y \in \mathbb{C}^M$.

10. Method according to Claim 9, wherein the vector y is such that:

$$y = F\begin{bmatrix}0_{M-L}\\ y\end{bmatrix}$$

11. Method according to either of Claims 9 and 10, wherein the update of the acoustic path $\Delta W^{(k)}$ for a current frame k is given by $\Delta w_b^{(k)} = G\Lambda_b^{(k)} \circ x_b^{(k)^*} \circ Fe^{(k)}$ , where:

   - "$\circ$" denotes the Hadamard product,
   - $G \in \mathbb{R}^{M \times M}$ is a matrix given by one or other of the equations:

$$G = FF^H \text{ and } G = I_M,$$

   - $\Lambda^{(k)} = [\Lambda_1^{(k)} ... \Lambda_B^{(k)}] \in \mathbb{R}^{M \times B}$, is a matrix representing the abovementioned normalization, and
   - $e^{(k)}$ is an a priori error estimated based on the signals x and y for the frame k.

12. Method according to Claim 11, wherein the a priori error is given by:

$$e^{(k)} = \begin{bmatrix}0_{M-L}\\ y^{(k)}\end{bmatrix} - \begin{bmatrix}0_{M-L}\\ 1_L\end{bmatrix} F^H \sum_{b=1}^{B}\left(w_b^{(k)} \circ x_b^{(k)^*}\right)$$

13. Method according to one of the preceding claims, wherein the adaptive filter is updated from a current frame k to a following frame k+1 as a function of an update of the acoustic path $\Delta W^{(k)}$ estimated for the current frame k, in line with a relationship of the type: $W^{(k+1)} = W^{(k)} + \Delta W^{(k)}$

14. Computer program comprising instructions for implementing the method according to one of Claims 1 to 13 when this program is executed by a processor.

15. Device for processing a signal y(t) coming from at least one microphone (MIC), comprising a processor (PROC) configured to execute a method according to one of Claims 1 to 13.

FIG. 1

FIG. 2

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BORRALLO, J. P.** ; **OTERO, M. G.** On the implementation of a partitioned block frequency domain adaptive filter (PBFDAF) for long acoustic echo cancellation. *Signal Processing*, 1992, vol. 27 (3), 301-315
- A frequency domain adaptive algorithm for colored measurement noise environment. **TRUMP, T.** Proceedings of the 1998 IEEE International Conference on Acoustics, Speech and Signal Processing, ICASSP'98 (Cat. No. 98CH36181). IEEE, May 1998, vol. 3, 1705-1708
- **JUNG, H. K.** ; **KIM, N. S.** ; **KIM, T.** A new double-talk detector using echo path estimation. *Speech communication*, 2005, vol. 45 (1), 41-48
- **MOONEN, M.** Double-talk-robust prediction error identification algorithms for acoustic echo cancellation. *IEEE Transactions on Signal Processing*, 2007, vol. 55 (3)
- **GIL-CACHO, J. M.** ; **VAN WATERSCHOOT, T.** ; **MOONEN, M.** ; **JENSEN, S. H.** A frequency-domain adaptive filter (FDAF) prediction error method (PEM) framework for double-talk-robust acoustic echo cancellation. *IEEE/ACM Transactions on Audio, Speech, and Language Processing*, 2014, vol. 22 (12), 2074-2086